# EUROPÄISCHE PATENTSCHRIFT

(11) **EP 0 930 427 B1**
(45) Veröffentlichungstag und Bekanntmachung des Hinweises auf die Patenterteilung: **18.08.2004**
(21) Anmeldenummer: 99100595.0
(22) Anmeldetag: 14.01.1999
(51) Int. Cl.: F02F 1/42, F02B 23/10, F02B 31/08

(54) **Brennkraftmaschine und Verfahren zur Gemischaufbereitung bei einer Brennkraftmaschine**
Internal combustion engine and method for its mixture preparation
Moteur à combustion interne et procédé de préparation du mélange

(30) Priorität: 17.01.1998 DE 19801607
(43) Veröffentlichungstag der Anmeldung: 21.07.1999
(73) Patentinhaber: AUDI AG, 85045 Ingolstadt (DE)
(72) Erfinder: Schladt, Thomas, 85117 Eitensheim (DE); Ottowitz, Alfred, 85084 Reichertshofen (DE); Wermuth, Dietmar, 85080 Gaimersheim (DE); Serifsoy, Murat, 85051 Ingolstadt (DE); Wurms, Rainer Dr., 85101 Lenting (DE)

(56) Entgegenhaltungen:
- EP-A- 0 778 403
- DE-A- 19 713 028
- DE-A- 19 713 029
- DE-A- 19 713 030
- PATENT ABSTRACTS OF JAPAN vol. 017, no. 604 (M-1506), 8. November 1993 (1993-11-08) & JP 05 179961 A (TOYOTA MOTOR CORP), 20. Juli 1993 (1993-07-20)

## Beschreibung

Die vorliegende Erfindung betrifft eine Brennkraftmaschine, die pro Zylinder zwei nebeneinander angeordnete Einlassventile, wenigstens ein Auslassventil, eine im wesentlichen koaxiale Zündkerze, ein Einspritzventil und einen Kolben aufweist, wobei das Einspritzventil zwischen den zwei Eintassventilen und dem an die beiden Einlassventile angrenzenden Abschnitt der Zylinderwand angeordnet ist, und der Kolben eine erste und eine zweite Brennraummulde aufweist, wobei die erste und die zweite Brennraummulde zu dem Einspritzventil jeweils unterschiedlich beabstandet angeordnet sind. Ferner betrifft die vorliegende Erfindung ein Verfahren zur Gemischaufbereitung bei einer Brennkraftmaschine.

Eine gattungsgemäße Brennkraftmaschine ist aus der Druckschrift DE 197 13 030 A1 bekannt. Bei dieser Brennkraftmaschine ist der Kolben mit zwei zungenförmigen Brennraummulden und einer H-förmigen Anordnung, von Leitrippen ausgestattet. Der Kraftstoff wird dort direkt in die Strömung innerhalb des Zylinders eingespritzt, um die Verbrennung des Kraftstoff-/Luftgemisches günstig zu beeinflussen.

Darüber hinaus ist auch in der Druckschrift JP-A-05 179 961 eine direkteinspritzende Brennkraftmaschine beschrieben. Zur besseren Gemischaufbereitung weist der Kolben dieser Brennkraftmaschine eine erste zungenförmige Brennraummulde und eine zweite keilförmige Brennraummulde sowie eine dazwischen angeordnete keilförmige Leitrippe auf.

Ferner ist aus der Druckschrift US 4,617,896 eine Brennkraftmaschine bekannt, bei welcher innerhalb des Saugrohres mehrere Einlasskanäle vorgesehen sind, welche den Einlassventilen zugeordnet werden können, und sind innerhalb dieser Einlasskanäle zum Teil: Drosselklappen vorgesehen. Der sich an das Saugrohr anschließende Zylinderkopf der Brennkraftmaschine weist dagegen einen den Einlassventilen gemeinsamen Einlasskanal auf, in den ein Einspritzventil mündet. Aufgrund der Gestaltung der Einlasskanäle kann im gemeinsamen Eintasskanal vor den Einlassventilen eine gute Gemischverwirbelung stattfinden. Problematisch ist jedoch, dass dieses Gemisch nicht ohne erhebliche Strömungsverluste an den Einlaßventilen vorbei in den Brennraum der Brennkraftmaschine eingebracht werden kann. Zudem ist diese Ausführungsform für Brennkraftmaschinen mit Benzindkekteinspritzung kaum geeignet.

Ausgehend von diesem Stand der Technik ist es Aufgabe der vorliegenden Erfindung, eine Brennkraftmaschine zu konzipieren, welche eine verbesserte Gemischaufbereitung sowie einen sparsameren Betrieb ermöglicht. Ferner ist es Aufgabe der Erfindung ein verbessertes Verfahren zur Gemischaufbereitung bei einer Brennkraftmaschine bereitzustellen.

Zur Lösung dieser Aufgabe weist die Brennkraftmaschine die Merkmale des Patentanspruchs 1 auf. Demnach sind die beiden Brennraummulden jeweils länglich ausgebildet, zur Mittellinie des Kolbens schräg orientiert und mittels eines im wesentlichen geraden Stegs voneinander getrennt, wobei auch der Steg zur Mittellinie des Kolbens schräg verläuft. Dadurch wird erreicht, dass die tumbleförmig in den Brennraum einströmende Frischluft, welche durch die von den Einlassventilen beherrschten Einlassöffnungen eintritt und an der den Einlassventilen gegenüberliegenden Zylinderwand entlang nach unten in Richtung auf den Kolben zu strömt, sowie der je nach Betriebszustand der Brennkraftmaschine früher oder später eingespritzte Kraftstoff mit der Frischluft homogen durchmischt oder aber als geschichtete Ladung aufbereitet, zur Zündkerze bewegt und dort gezündet werden kann. Die besondere Ausbildung und Anordnung der beiden Brennraummulden und des Stegs unterstützen dabei, dass die tumbleförmige Frischluftströmung und der kegelförmige Einspritzstrahl im homogenen Magerbetrieb stark durchmischt werden, indem der Kraftstoff etwa mittig in die Frischluftströmung eingespritzt wird, und dass die tumbleförmige Frischluftströmung und der kegelförmige Einspritzstrahl im geschichteten Magerbetrieb gegeneinander stabilisiert werden, indem der Kraftstoff unterhalb der Frischluftströmung in die zweite der beiden Brennraummulden eingespritzt wird.

Vorteilhaft ist bei der erfindungsgemäßen Brennkraftmaschine vorgesehen, dass die Ventilteller der beiden Eintassventile innerhalb der Zylinderfläche einen maximalen Abstand zueinander aufweisen. Zudem sollten die Ventilteller der beiden Einlassventile in Schließstellung einen minimalen Abstand zu der Achse der Kurbelwelle aufweisen. Diese Merkmale begünstigen die Erzeugung der tumbleförmigen Frischluftströmung innerhalb des Brennraums.

Das Einspritzventil kann in einem Winkel von ca. 30 bis 75 Grad zur Achse des Zylinders geneigt angeordnet sein. Dadurch kann das zwischen den beiden Einlassventilen sowie dem an die beiden Einlassventile angrenzenden Abschnitt der Zylinderwand angeordnete Einspritzventil den zur Verfügung stehenden Bauraum in platzsparender Weise nutzen.

Bevorzugt weist das Einspritzventil einen Bendwinkel auf, der den Einspritzstrahl ablenkt. Mit Hilfe dieses Bendwinkels wird die Richtung des Einspritzstrahls so eingestellt, dass der Einspritzstrahl für den homogenen Magerbetrieb bei einem ersten Kurbelwellenwinkelbereich in die Tumbleströmung folgt und für den geschichteten Betrieb bei einem zweiten Kurbelwellenwinkelbereich unterhalb der im Brennraum vorherrschenden Tumbleströmung in die zweite Brennraummulde erfolgt, wodurch in beiden Betriebsfällen eine möglichst optimale Gemischaufbereitung stattfindet.

Zweckmäßig spritzt das Einspritzventil für den homogenen Magerbetrieb im wesentlichen während des Ansaugtaktes bei einem Kurbelwellenwinkel von ca. 440 bis 280 Grad, bevor der Kolben den oberen Totpunkt erreicht, Kraftstoff in den Zylinder ein. Denn auf diese Weise wird der Kraftstoff etwa mittig in die im Brennraum vorherrschende Frischluftströmung eingebracht, so dass der Kraftstoff und die Frischluft gut durchmischt werden können.

Und für den geschichteten Magerbetrieb spritzt das Einspritzventil während des Kompressionstaktes bei einem Kurbelwellenwinkel von ca. 120 bis 30 Grad, bevor der Kolben den oberen Totpunkt erreicht, Kraftstoff in die zweite Brennraummulde des Kolbens ein. Somit wird ein großer Teil des Kraftstoffs unterhalb der tumbleförmigen Frischluftströmung eingespritzt, von der Frischluftströmung mit nach oben gerissen und schließlich zur Zündkerze transportiert. Dabei dient die erste Brennraummulde zur Führung der tumbleförmigen Frischluftströmung, während die zweite Brennraummulde zur Stabilisierung der sich ausbildenden Schichtladung dient.

Bevorzugt ist die erste der beiden Brennraummulden etwas kleiner und weniger tief ausgebildet als die zweite der beiden Brennraummulden, um zu begünstigen, dass der Kraftstoff im geschichteten Magerbetrieb unterhalb der tumbleförmigen Frischluftströmung in die zweite der beiden Brennraummulden eingespritzt werden kann.

Die Begrenzungswand der ersten Brennraummulde kann zur Seite der Einlassventile hin steil ansteigend und zur Seite der Auslassventile hin sanft auslaufend ausgebildet sein, während die Begrenzungswand der zweiten Brennraummulde zur Seite der Einlassventile hin sanft auslaufend und zur Seite der Auslassventile hin steil ansteigend ausgebildet ist. Durch die sanft auslaufenden Begrenzungswände wird das Einlaufen der tumbleförmigen Frischluftströmung in die erste Brennraummulde bzw. das Einspritzen des kegelförmigen Kraftstoffstrahls in die zweite Brennraummulde erleichtert. Und durch die steil ansteigenden Begrenzungswände wird im weiteren Verlauf der Gemischaufbereitung die Durchmischung der Frischluft und des Kraftstoffs unterstützt.

Ist der Steg im Bereich unterhalb der Zündkerze mit einem die beiden Brennraummulden verbindenden Durchbruch versehen, so schafft der Durchbruch einen zusätzlichen Raum für eine noch stärkere Durchmischung von fettem und magerem Gasgemisch und gewährleistet eine sichere Entflammung. Es hat sich dabei bewährt, wenn der Durchbruch die Höhe des Stegs auf wenigstens die Hälfte reduziert und die Länge des Stegs um ca. 8-20 % des Kolbendurchmessers verringert.

Vorteilhaft sollte der Kolben aufgrund der zueinander geneigt angeordneten Einlass- und Auslassventile dachförmig ausgebildet sein, wobei der Dachfirst im wesentlichen entlang der Mittellinie des Kolbens verlaufen sollte. Durch diese Ausgestaltung des Kolbens ist eine Brennraumform geschaffen, die ausreichend Möglichkeiten für Quetschflächen bietet und ein hohes Verdichtungsverhältnis sicherstellt.

Gelöst wird die Aufgabe der vorliegenden Erfindung ferner durch ein Verfahren zur Gemischaufbereitung bei einer Brennkraftmaschine gemäß Patentanspruch 12, indem innerhalb der Zylinder eine komplexe Luftströmung zeugt wird, die als ein in zwei Strömungszweige aufgeteilter Doppeltumble ausgebildet ist. Mittels dieser beiden Strömungszweige wird die Gemischaufbereitung und damit der Wirkungsgrad der Brennkraftmaschine ganz erheblich verbessert.

Bevorzugt schließen die Achsen der beiden tumbleförmigen Strömungszweige des Doppeltumbles zusammen einen Winkel von ca. 0 bis +/- 45 Grad ein.

Für den homogenen Magerbetrieb der Brennkraftmaschine wird Kraftstoff entgegen die beiden Strömungszweige eingespritzt und für einen geschichteten Magerbetrieb wird Kraftstoff unterhalb eines der beiden Strömungszweige oder unterhalb die beiden Strömungszweige in die zweite Brennraummulde eingespritzt. Somit wird der eingespritzte Kraftstoff beim homogenen Magerbetrieb innerhalb des Brennraums gut verteilt und beim geschichteten Magerbetrieb als stabilisierte Gemischwolke zur Zündkerze transportiert, wo er dann entzündet werden kann.

Die vorliegende Erfindung wird anhand der nachfolgenden Zeichnungsfiguren näher erläutert. Es zeigen:
- Figur 1: Eine perspektivische Ansicht der Anordnung von Gaswechselventilen, Zündkerze, Einspritzventil und Kolben einer Brennkraftmaschine in vereinfachter Darstellung;
- Figur 2: eine Draufsicht des Kolbens aus Figur 1;
- Figur 3: eine entlang der Linie III-III geschnittene Ansicht des Kolbens aus Figur 2;
- Figur 4: eine entlang der Linie IV-IV geschnittene Ansicht des Kolbens aus Figur 2;
- Figur 5: eine entlang der Linie V-V geschnittene Ansicht des Kolbens aus Figur 2; und
- Figur 6: eine perspektivische Ansicht der Anordnung aus Figur 1, jedoch ohne Einspritzventil und mit einer pfeilartigen Darstellung der komplexen Luftströmung.

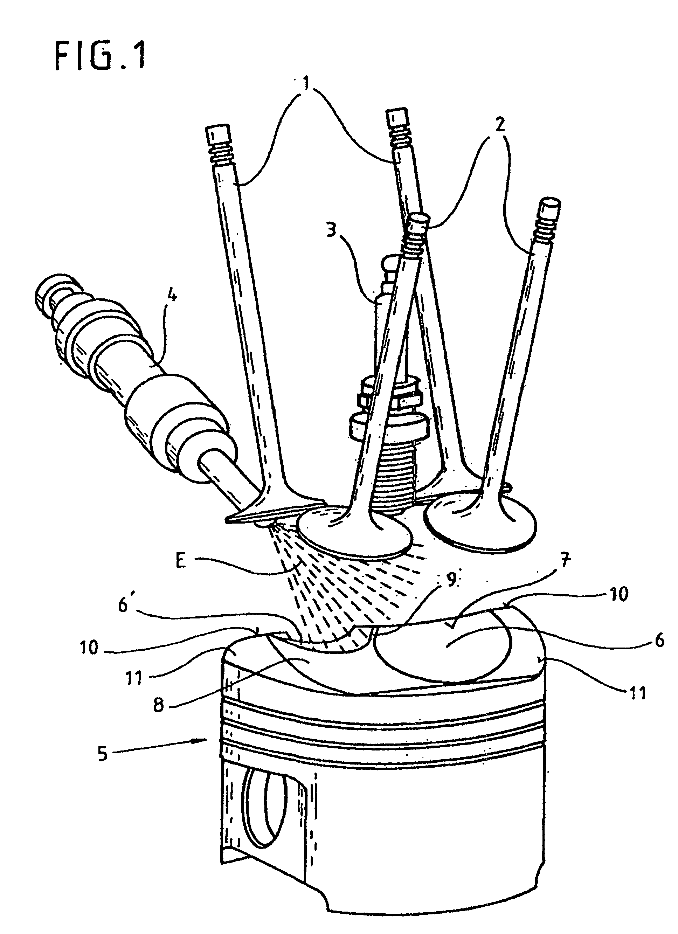

Die erfindungsgemäße Brennkraftmaschine ist in der Figur 1 mit zwei nebeneinander angeordneten Einlassventilen 1 pro Zylinder ausgestattet. Diese Einlassventile 1 befinden sich auf einer Halbseite eines nicht näher dargestellten Zylinders und zwei nebeneinander angeordnete Auslassventile 2 befinden sich auf der anderen Halbseite des Zylinders. Zudem weist die Brennkraftmaschine eine Zündkerze 3 auf, die konzentrisch zu der Achse des Zylinders angeordnet ist. Pro Zylinder ist außerdem ein Einspritzventil 4 vorgesehen, welches zwischen den beiden Einlassventilen 1 und dem an die beiden Einlassventile 1 angrenzenden Abschnitt der Zylinderwand angeordnet ist. Schließlich zeigt die Figur 1 auch einen im Zylinder der Brennkraftmaschine angeordneten Kolben 5 mit zwei Brennraummulden 6, 6'.

Die durch die beiden Einlassventile 1 in den Zylinder einströmende Frischluft bildet innerhalb des Brennraums eine Tumbleströmung aus. Die Ausbildung der Tumbleströmung wird dabei begünstigt, wenn die Ventilteller der beiden Einlassventile 1 innerhalb der Zylinderfläche einen maximalen Abstand zueinander aufweisen und wenn die Ventilteller der beiden Einlassventile in Schließstellung einen minimalen Abstand zu der Achse der Kurbelwelle aufweisen.

In der Figur 1 sind die Einlassventile 1 sowie die Auslassventile 2 zu der Zündkerze 3 bzw. zu der Achse des Zylinders jeweils geneigt angeordnet.

Auch das Einspritzventil 4 der Brennkraftmaschine ist zu der Achse des Zylinders geneigt angeordnet, wobei der Neigungswinkel a ca. 30 bis 75 Grad beträgt, so dass der Einspritzstrahl E je nach Betriebszustand und Kurbelwellenwinkel in die vorherrschende Strömung bzw. in die zweite Brennraummulde 6' gerichtet ist. Bei der gezeigten Ausführungsform der Erfindung ist das Einspritzventil 4 mit einem Bendwinkel versehen, der den Einspritzstrahl E um ca. 15 Grad ablenkt, so dass der Einspritzstrahl E je nach Betriebszustand und Kurbelwellenwinkel in die vorherrschende Strömung bzw. in die zweite Brennraummulde 6' gerichtet ist.

Um einen homogenen Magerbetrieb der Brennkraftmaschine zu realisieren, wird durch das Einspritzventil 4 während des Ansaugtaktes bei einem Kurbetwellenwinkel von ca. 440 bis 280 Grad, bevor der Kolben 5 den oberen Totpunkt erreicht, Kraftstoff in die Frischluftströmung eingespritzt. Dadurch verbleibt genügend Zeit für die Einspritzung einer ausreichenden Menge an Kraftstoff sowie für eine homogene Durchmischung von Kraftstoff und Frischluft.

Um dagegen einen geschichteten Magerbetrieb der Brennkraftmaschine zu realisieren, wird durch das Einspritzventil 4 während des Kompressionstaktes bei einem Kurbetwellenwinkel von ca. 120 bis 30 Grad, bevor der Kolben 5 den oberen Totpunkt erreicht, Kraftstoff in die zweite Brennraummulde 6' eingespritzt. Somit wird innerhalb des Brennraums eine geschichtete Gemischwolke mit einem zündfähigen Anteil erzeugt. Die tumbleförmige Frischluftströmung wird dabei in der ersten Brennraummulde 6 des Kolbens 5 zusammengeführt, während der eingespritzte Kraftstoff in der zweiten Brennraummulde 6' gehalten bzw. stabilisiert wird und durch die weitere Verdichtungsbewegung des Kolbens 5 in den Bereich unterhalb der Zündkerze 3 befördert wird, so dass der zündfähige Anteil der Gemischwolke von einem Zündfunken der im Zylinder zentral angeordneten Zündkerze 3 erreichbar ist.

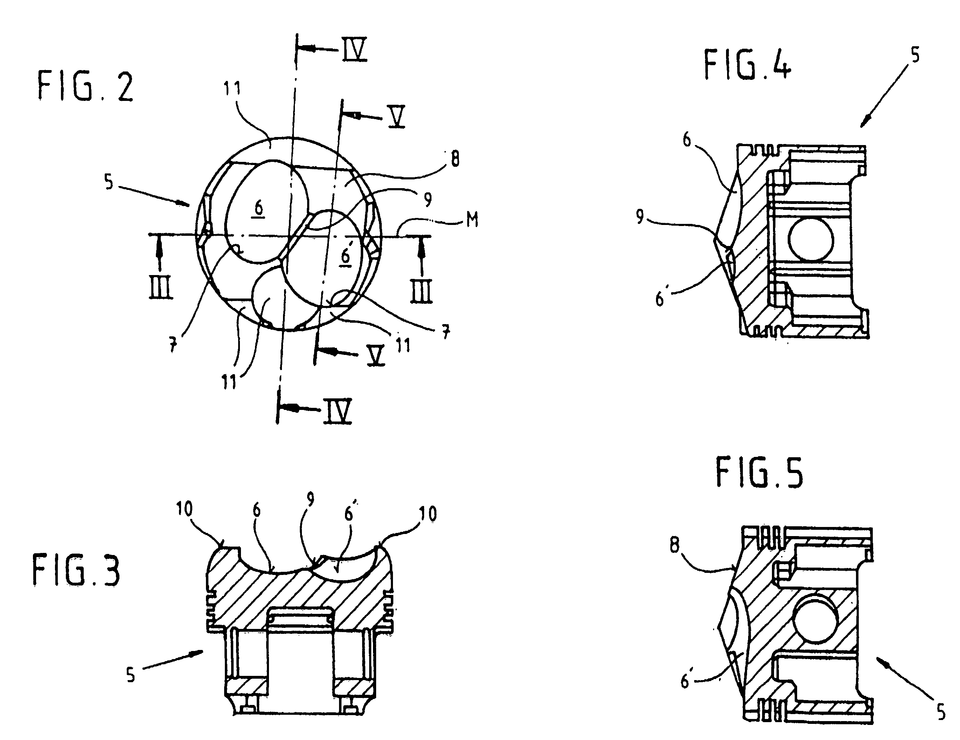

Die Zentren der ersten und der zweiten Brennraummulde 6, 6' sind jeweils unterschiedlich beabstandet zu dem Einspritzventil 4 angeordnet. Gemäß der gezeigten Ausführungsform in den Figuren 1 bis 6 sind die beiden Brennraummulden 6, 6' zur Mittellinie M des Kolbens 5 versetzt angeordnet. Dabei sind die beiden Brennraummulden 6, 6' in der Projektion entlang der Achse des Zylinders jeweils oval ausgebildet, sind die Längsachsen der Brennraummulden 6, 6' zur Mittellinie der Kolbens 5 schräg angeordnet und ist die erste Brennraummulde 6 etwas kleiner und weniger tief ausgebildet als die zweite Brennraummulde 6'.

Die Begrenzungswand 7 der ersten Brennraummulde 6 ist zur Seite der Einspritzventile 1 hin steil ansteigend und zur Seite der Auslassventile 2 hin sanft auslaufend ausgebildet, während die Begrenzungswand 7 der zweiten Brennraummulde 6' zur Seite der Einlassventile 1 hin sanft auslaufend und zur Seite der Auslassventile 2 hin steil ansteigend ausgebildet ist. Die so ausgebildeten Begrenzungswände 7 sind besonders gut geeignet, damit die tumbleartige Frischluftströmung nach oben umgeleitet und der Kraftstoff in die zweite Brennraummulde 6' eingespritzt werden kann. Unterstützt wird die Umlenkung der Tumbleströmung zudem durch eine oder zwei Rampen 8 neben der ersten Brennraummulde 6, die an die steil ansteigende Begrenzungswand 7 der zweiten Brennraummulde 6' angrenzend angeordnet sind.

Die beiden Brennraummulden 6, 6' sind zur Optimierung der Gemischaufbereitung mittels eines im wesentlichen geraden Stegs 9 voneinander getrennt. Dieser Steg 9 ist zur Mittellinie M des Kolbens 5 schräg angeordnet und im Bereich unterhalb der Zündkerze 3 mit einem die beiden Brennraummulden 6, 6' verbindenden Durchbruch versehen. Dieser Durchbruch schafft einen zusätzlichen Raum unterhalb der Zündkerze 3 für eine stärkere Durchmischung der Gasgemische und/oder eine sichere Entflammung.

Ferner sind die Kolben 5 gemäß der gezeigten Ausführungsform der Erfindung dachförmig ausgebildet, wobei der Dachfirst 10 im wesentlichen entlang der Mittellinie M des Kolbens 5 verläuft, welche gleichzeitig die Trennlinie zwischen der Einlassseite und der Auslassseite des Kolbens 5 darstellt.

Schließlich weist der Kolben 5 noch einige Quetschflächen 11 auf, die außerhalb der beiden Brennraummulden 6, 6' angeordnet sind.

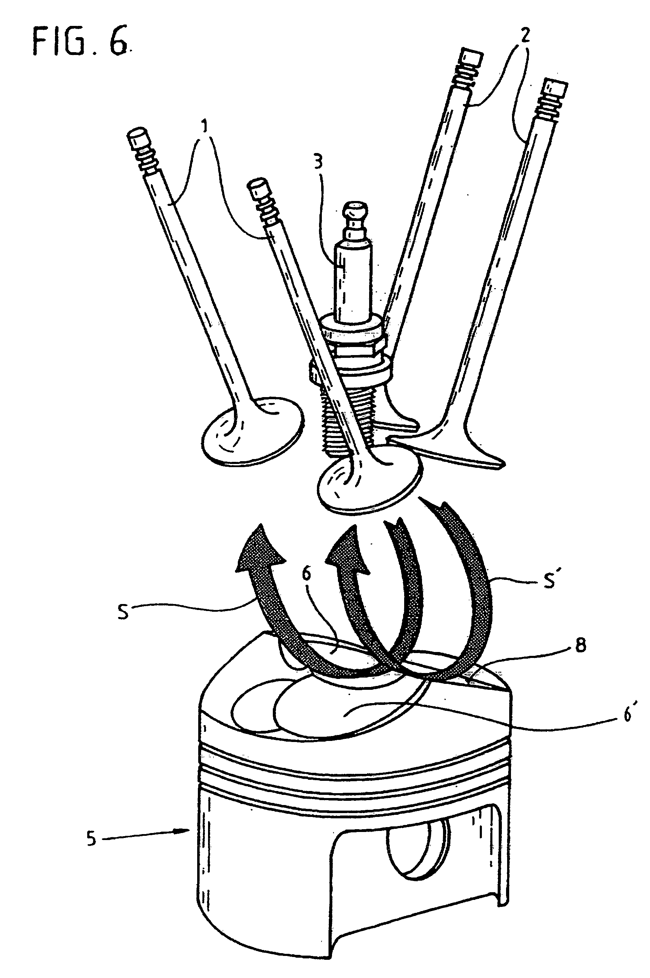

In der Figur 6 sind zur Erläuterung des Verfahrens zur Gemischaufbereitung bei einer Brennkraftmaschine nochmals die Anordnung von Gaswechselventilen 1, 2, Zündkerze 3 und Kolben 5 der Brennkraftmaschine aus Figur 1 dargestellt. Dabei ist die komplexe Luftströmung als ein in zwei Strömungszweige S, S' aufgeteilter Doppeltumble ausgebildet.

Die beiden Strömungszweige S, S' treten jeweils durch eine der von den beiden Einlassventilen 1 beherrschten Einlassöffnungen in den Brennraum ein, werden an der den Einlassventilen 1 gegenüberliegenden Zylinderwand nach unten abgelenkt und setzen sich daraufhin in der ersten Brennraummulde 6 fort, wo sie schließlich nach oben hin umgelenkt werden. Dabei schließen die Tumbleachse des ersten Strömungszweigs S und die Tumbleachse des zweiten Strömungszweigs S' zusammen einen Winkel von ca. 20 Grad ein.

Je nachdem, ob die Brennkraftmaschine nun im homogenen Magerbetrieb oder im geschichteten Magerbetrieb arbeitet, wird der Kraftstoff entgegen die beiden Strömungszweige S, S' oder unterhalb den zweiten Strömungszweig S' bzw. unterhalb die beiden Strömungszweige S, S' in die zweite Brennraummulde 6' des Kolbens 5 eingespritzt.

## Patentansprüche

1. Brennkraftmaschine, die pro Zylinder zwei nebeneinander angeordnete Einlassventile, wenigstens ein Auslassventil, eine im wesentlichen koaxiale Zündkerze, ein Einspritzventil und einen Kolben aufweist, wobei
- das Einspritzventil (4) zwischen den zwei Einlassventiten (1) und dem an die beiden Einlassventile (1) angrenzenden Abschnitt der Zylinderwand angeordnet ist, und
- der Kolben (5) eine erste und eine zweite Brennraummulde (6, 6') aufweist, wobei die erste und die zweite Brennraummulde (6, 6') zu dem Einspritzventil (4) jeweils unterschiedlich beabstandet angeordnet sind,
**dadurch gekennzeichnet, dass**
die beiden Brennraummulden (6, 6') jeweils länglich ausgebildet sind, zur Mittellinie (M) des Kolbens (5) schräg orientiert sind und mittels eines im wesentlichen geraden Stegs (9) voneinander getrennt sind, wobei auch der Steg (9) zur Mittellinie (M) des Kolbens (5) schräg verläuft.

2. Brennkraftmaschine nach Anspruch 1, **dadurch gekennzeichnet, dass** die Ventilteller der beiden Einlassventile (1) innerhalb der Zylinderfläche einen maximalen Abstand zueinander aufweisen.

3. Brennkraftmaschine nach einem der Ansprüche 1 oder 2, **dadurch gekennzeichnet, dass** die Ventilteller der beiden Einlassventile (1) in Schließstellung einen minimalen Abstand zu der Achse der Kurbelwelle aufweisen.

4. Brennkraftmaschine nach einem der Ansprüche 1 bis 3, **dadurch gekennzeichnet, dass** das Einspritzventil (4) in einem Winkel (α) von ca. 30 bis 75 Grad zur Achse des Zylinders geneigt angeordnet ist.

5. Brennkraftmaschine nach einem der Ansprüche 1 bis 4, **dadurch gekennzeichnet, dass** das Einspritzventil (4) einen Bendwinkel aufweist, der den Einspritzstrahl (E) ablenkt.

6. Brennkraftmaschine nach einem der Ansprüche 1 bis 5, **dadurch gekennzeichnet, dass** das Einspritzventil (4) im wesentlichen während des Ansaugtaktes bei einem Kurbelwellenwinkel von ca. 440 bis 280 Grad, bevor der Kolben (5) den oberen Totpunkt erreicht, Kraftstoff in den Zylinder einspritzt.

7. Brennkraftmaschine nach einem der Ansprüche 1 bis 6, **dadurch gekennzeichnet, dass** das Einspritzventil (4) während des Kompressionstaktes bei einem Kurbelwellenwinkel von ca. 120 bis 30 Grad, bevor der Kolben (5) den oberen Totpunkt erreicht, Kraftstoff in den Zylinder einspritzt.

8. Brennkraftmaschine nach einem der Ansprüche 1 bis 7, **dadurch gekennzeichnet, dass** die erste Brennraummulde (6) etwas kleiner und weniger tief ausgebildet ist als die zweite Brennraummulde (6').

9. Brennkraftmaschine nach einem der Ansprüche 1 bis 8, **dadurch gekennzeichnet, dass** die Begrenzungswand (7) der ersten Brennraummulde (6) zur Seite der Einlassventile (1) hin steil ansteigend und zur Seite der Auslassventile (2) hin sanft auslaufend ausgebildet ist.

10. Brennkraftmaschine nach einem der Ansprüche 1 bis 9, **dadurch gekennzeichnet, dass** die Begrenzungswand (7) der zweiten Brennraummulde (6') zur Seite der Einlassventile (1) hin sanft auslaufend und zur Seite der Ausiassventile (2) hin steil ansteigend ausgebildet ist.

11. Brennkraftmaschine nach einem der Ansprüche 1 bis 10, **dadurch gekennzeichnet, dass** der Steg (9) im Bereich unterhalb der Zündkerze (3) mit einem die beiden Brennraummulden (6, 6') verbindenden Durchbruch versehen ist.

12. Brennkraftmaschine nach einem der Ansprüche 1 bis 11, **dadurch gekennzeichnet, dass** der Kolben (5) dachförmig ausgebildet ist und der Dachfirst (10) im wesentlichen entlang der Mittellinie (M) des Kolbens (5) verläuft.

13. Verfahren zur Gemischaufbereitung bei einer Brennkraftmaschine gemäß den Ansprüchen 1 bis 11, **gekennzeichnet durch** die Erzeugung einer komplexen Luftströmung innerhalb der Zylinder, die als ein in zwei Strömungszweige (S, S') aufgeteilter Doppeltumble ausgebildet ist.

14. Verfahren nach Anspruch 13, **dadurch gekennzeichnet, dass** die Achsen der beiden tumbleförmigen Strömungszweige (S, S') des Doppeltumbles zusammen einen Winkel von ca. 0 bis +/- 45 Grad einschließen.

15. Verfahren nach einem der Ansprüche 13 oder 14, **dadurch gekennzeichnet, dass** für einen homogenen Magerbetrieb der Brennkraftmaschine Kraftstoff entgegen die beiden Strömungszweige (S, S') eingespritzt wird.

16. Verfahren nach einem der Ansprüche 13 oder 14, **dadurch gekennzeichnet, dass** für einen geschichteten Magerbetrieb der Brennkraftmaschine Kraftstoff unterhalb eines der beiden Strömungszweige (S') bzw. unterhalb die beiden Strömungszweige (S, S') in die zweite Brennraummulde (6') eingespritzt wird.

## Claims

1. Internal combustion engine which exhibits two inlet valves arranged adjacent to each other, at least one outlet valve, an essentially coaxial sparking plug, an injection valve and a piston, wherein
- the injection valve (4) is arranged between the two inlet valves (1) and the section of the cylinder wall adjacent to the two inlet valves (1), and
- the piston (5) exhibits a first and second combustion chamber trough (6, 6'), wherein the first and second combustion chamber trough (6, 6') are each arranged at different distances from the injection valve (4),
**characterised in that**
the two combustion chamber troughs (6, 6') are each oblong in shape, are orientated obliquely to the centreline (M) of the piston (5) and are separated from each other by an essentially straight ridge (9), wherein the ridge (9) also runs obliquely to the centreline (M) of the piston (5).

2. Internal combustion engine according to Claim 1, **characterised in that** the valve heads of the two inlet valves (1) exhibit a maximum distance from each other inside the cylinder area.

3. Internal combustion engine according to one of Claims 1 or 2, **characterised in that** the valve heads of the two inlet valves (1) exhibit a minimum distance from the axis of the crankshaft in the closing position.

4. Internal combustion engine according to one of Claims 1 to 3, **characterised in that** the injection valve (4) is arranged so that it is inclined at an angle (α) of approx. 30 to 75 degrees to the axis of the cylinder.

5. Internal combustion engine according to one of Claims 1 to 4, **characterised in that** the injection valve (4) exhibits a bending angle which deflects the injection jet (E).

6. Internal combustion engine according to one of Claims 1 to 5, **characterised in that** the injection valve (4) injects fuel into the cylinder essentially during, the intake cycle at a crankshaft angle of approx. 440 to 280 degrees before the piston (5) reaches the upper dead centre.

7. Internal combustion engine according to one of Claims 1 to 6, **characterised in that** the injection valve (4) injects fuel into the cylinder during the compression cycle at a crankshaft angle of approx. 120 to 30 degrees before the piston (5) reaches the upper dead centre.

8. Internal combustion engine according to one of Claims 1 to 7, **characterised in that** the first combustion engine trough (6) is slightly smaller and shallower in design than the second combustion chamber trough (6').

9. Internal combustion engine according to one of Claims 1 to 8, **characterised in that** the boundary wall (7) of the first combustion chamber trough (6) is designed so that rises steeply toward the side of the inlet valves (1) and drops gently toward the side of the outlet valves (2).

10. Internal combustion engine according to one of Claims 1 to 9, **characterised in that** the boundary wall (7) of the second combustion chamber trough (6') is designed so that it drops gently toward the side of the inlet valves (1) and rises steeply toward the side of the outlet valves (2).

11. Internal combustion engine according to one of Claims 1 to 10, **characterised in that** the ridge (9) is provided in the area below the sparking plug (3) with an opening connecting the two combustion chamber troughs (6, 6').

12. Internal combustion engine according to one of Claims 1 to 11, **characterised in that** the piston (5) is of roof-shaped design and **in that** the roof ridge (10) runs essentially along the centreline (M) of the piston (5).

13. Method for mixture preparation in an internal combustion engine according to Claims 1 to 11, **characterised by** the generation of a complex air flow inside the cylinders, the mixture preparation system being designed as a double tumble divided into two flow branches (S, S').

14. Method according to Claim 13, **characterised in that** the axes of the two tumble-shaped flow branches (S, S') of the double tumble together form an angle of approx. 0 to +/- 45 degrees.

15. Method according to Claims 13 or 14, **characterised in that** fuel is injected against the two flow branches (S, S') for homogeneous lean mixture operation of the internal combustion engine.

16. Method according to one of Claims 13 or 14, **characterised in that** fuel is injected underneath one of the two flow branches (S') or below both, flow branches, (S, S') into the second combustion chamber tough (6') for a stratified lean mixture operation of the internal combustion engine.

## Revendications

1. Moteur à combustion interne, présentant par cylindre deux soupapes d'admission disposées l'une à côté de l'autre, au moins une soupape d'échappement, une bougie d'allumage sensiblement coaxialement, un injecteur et un piston, où
- l'injecteur (4) est disposé entre deux soupapes d'admission (1) et le tronçon, limitrophe aux deux soupapes d'admission (1), de la paroi de cylindre, et
- le piston (5) présente une première et une deuxième auges de chambre de combustion (6, 6'), la première et la deuxième auges de chambre de combustion (6, 6') étant disposées chacune à une distance différente de l'injecteur (4),
**caractérisé en ce que**
les deux auges de chambre de combustion (6, 6') sont chacune allongées, sont orientées par rapport à l'axe (M) du piston (5) et séparées l'une de l'autre, à l'aide d'une nervure (9) sensiblement rectiligne, la nervure (9) s'étendant également obliquement par rapport à l'axe (M) du piston (5).

2. Moteur à combustion interne selon la revendication 1, **caractérisé en ce que** les plateaux de soupape des deux soupapes d'admission (1), à l'intérieur de la surface de cylindre, présentent un espacement mutuel maximal.

3. Moteur à combustion interne selon les revendications 1 ou 2, **caractérisé en ce que** les plateaux de soupape des deux soupapes d'admission (1), en position de fermeture, présentent un espacement minimal par rapport à l'axe du vilebrequin.

4. Moteur à combustion interne selon l'une des revendications 1 à 3, **caractérisé en ce que** l'injecteur (4) est disposé sous un angle (α) d'environ 30 à 75 degrés par rapport à l'axe du cylindre.

5. Moteur à combustion interne selon l'une des revendications 1 à 4, **caractérisé en ce que** l'injecteur (4) présente un angle de coudage, déviant le jet d'injection (E).

6. Moteur à combustion interne selon l'une des revendications 1 à 5, **caractérisé en ce que** l'injecteur (4), essentiellement pendant la course d'aspiration, pour un angle de vilebrequin d'environ 440 à 280 degrés, injecte du carburant dans le cylindre avant que le piston (5) atteigne le point mort haut.

7. Moteur à combustion interne selon l'une des revendications 1 à 6, **caractérisé en ce que** l'injecteur (4), pendant la course de compression, pour un angle de vilebrequin d'environ 120 à 30 degrés, injecte du carburant dans le cylindre, avant que le piston (5) atteigne le point mort haut.

8. Moteur à combustion interne selon l'une des revendications 1 à 7, **caractérisé en ce que** la première auge de chambre de combustion (6) est un peu plus petite et moins profonde que la deuxième auge de chambre de combustion (6').

9. Moteur à combustion interne selon l'une des revendications 1 à 8, **caractérisé en ce que** la paroi de limitation (7) de la première auge de chambre de combustion (6) monte de façon raide vers le côté des soupapes d'admission (1) et évolue selon un tracé fluide, vers le côté des soupapes d'admission (2).

10. Moteur à combustion interne selon l'une des revendications 1 à 9, **caractérisé en ce que** la paroi de limitation (7) de la deuxième auge de chambre de combustion (6') évolue selon un tracé fluide, vers le côté des soupapes d'admission (1) et monte de façon raide vers le côté des soupapes d'échappement (2).

11. Moteur à combustion interne selon l'une des revendications 1 à 10, **caractérisé en ce que** la nervure (9) est munie, dans la zone située au-dessous de la bougie d'allumage (3), d'un passage reliant les deux auges de chambre de combustion (6, 6').

12. Moteur à combustion interne selon l'une des revendications 1 à 11, **caractérisé en ce que** le piston (5) est conformé en toit et le faîte de toit (10) s'étend sensiblement le long de l'axe (M) du piston (5).

13. Procédé de préparation de mélange dans un moteur à combustion interne selon les revendications 1 à 11, **caractérisé par** la production d'un écoulement d'air complexe à l'intérieur des cylindres, réalisé sous la forme d'un renversement double, divisé en deux branches d'écoulement (S, S').

14. Procédé selon la revendication 13, **caractérisé en ce que** les axes des deux ramifications d'écoulement (S, S'), en forme de renversement, du renversement double, font ensemble un angle d'environ 0 à +/- 45 degrés.

15. Procédé selon l'une des revendications 13 ou 14, **caractérisé en ce que** du carburant est injecté à l'encontre des deux ramifications d'écoulement (S, S'), pour obtenir un fonctionnement en régime pauvre homogène du moteur à combustion interne.

16. Procédé selon l'une des revendications 13 ou 14, **caractérisé en ce que**, pour obtenir un fonctionnement en régime pauvre, stratifié, du moteur à combustion interne, du carburant est injecté au-dessous d'une des deux ramifications d'écoulement (S'), respectivement au-dessous des deux ramifications d'écoulement (S, S') dans la deuxième auge de chambre de combustion (6').
